# EUROPEAN PATENT APPLICATION

(11) **EP 4 685 462 A1**
(43) Date of publication of application: **28.01.2026**
(21) Application number: 24191316.9
(22) Date of filing: 26.07.2024
(51) Int. Cl.: G01N 15/14, B01L 3/00, G01N 15/149, G01N 15/1433, G01N 15/1434, G01N 15/10

(54) **DEVICE AND METHOD FOR SORTING BIOLOGICAL CELLS**

(71) Applicant: Imec VZW, 3001 Leuven (BE)
(72) Inventor: JAYAPALA, Murali, 3300 Kumtich (BE); VAN ROY, Willem, 3360 Bierbeek (BE); PEUMANS, Peter, 1540 Herfelingen (BE)
(74) Representative: AWA Sweden AB

(57) **Abstract**

According to an aspect of the present inventive concept there is provided a device for sorting cells comprising: a flow channel, the flow channel comprises at least one zone associated with a cell category, configured to modify movement of the biological cell in dependence of the cell belonging to the cell category; the flow channel comprises a sorting channel having a width for presenting the cells in a queue one-by-one; the device comprises a first detector configured to detect a cell exhibiting at least one modified movement; the device comprising a second detector for verifying an order of the cells in the queue or detecting a change in the order of the cells in the queue; the device comprises a sorting element configured to act on the biological cells in the queue, to selectively affect a cell of the queue based on the order of the cells and the classification of the cell.

## Description

### Technical field

The present description relates to a device and a method for sorting biological cells.

### Background

Sorting of biological cells is important both for cell analysis and cell therapy. According to some sorting methods, sorting is facilitated by labelling the cells. In magnetic-activated cell sorting (MACS) cells are labelled by attaching magnetic markers while in fluorescent-activated cell sorting (FACS) cells are labelled by attaching fluorescent markers. Other sorting methods use label-free sorting, wherein no markers are attached to the cells.

When labeling the cells, a step of de-labelling is often needed before further processing of the sorted cells. Thus, there is a need in the art for improvements.

### Summary

It is an objective of the invention to enable sorting of biological cells. It is a further objective of the invention to enable label-free sorting of biological cells. It is a further objective of the invention to enable cell sorting devices which are cost-effective and/or have a high cell throughput and/or are compact and/or are reprogrammable. These and other objectives of the invention are at least partly met by the invention as defined in the independent claims. Preferred embodiments are set out in the dependent claims. In the following the term cell refers to a biological cell, unless otherwise stated.

According to a first aspect, there is provided a device for sorting biological cells, the device comprising:
a flow channel configured to pass a flow of liquid, wherein:
the flow of liquid carries the biological cells to be sorted,
the flow channel comprises at least one zone,
each zone of the flow channel is associated with a cell category, wherein the zone of the flow channel is configured to modify movement of the biological cell in dependence of the biological cell belonging to the cell category;
the flow channel comprises a sorting channel arranged after the at least one zone, the sorting channel having a width for presenting the biological cells in a queue one-by-one;
a first detector configured to detect a biological cell exhibiting at least one modified movement in one zone of the flow channel for classifying the biological cell into the cell category;
a second detector for verifying an order of the biological cells in the queue or detecting a change in the order of the biological cells in the queue;
a sorting element configured to act on the biological cells in the queue, wherein the sorting element selectively affects a biological cell of the queue based on the order of the biological cells in the queue and the classification of the biological cell.

Cells may be characterized by the molecules they comprise, e.g. the molecules comprised in the cell membrane. Molecules comprised in the cell membrane may e.g. be antigens. A way of checking whether a cell comprises a certain cell membrane molecule may be to let the cell react with a molecule that binds specifically to said cell membrane molecule. For example, an antigen may correspond to one or more antibodies, where the antigen and antibody binds specifically to each other. Consequently, cells may be divided into cell categories depending on which cell membrane molecules they comprise or which molecules the cells bind to. For example, the antigen CD4 (cluster of differentiation 4) molecule in cell membranes is a glycoprotein which binds to anti-CD4 antibodies. Cells that bind to anti-CD4 antibodies may form one cell category. Such cells may be detected based on their modified movements when they travel through a zone associated with the cell category CD4 positive cells. Analogously, cells that bind to anti-CD8 (cluster of differentiation 8) antibodies may form another cell category. Such cells may be detected based on their modified movements when they travel through a zone associated with the cell category CD8 positive cells. Thus, a cell category may be a category of cells which binds to a specific molecule such as an antibody.

The at least one zone of the flow channel being associated with a cell category may for instance comprise at least one surface of a wall of the flow channel coated with molecules having an affinity to the cell category associated with the zone. Alternatively, the at least one zone of the flow channel being associated with a cell category may comprise pillars or other obstacles having at least one surface coated with molecule having an affinity of the cell category associated with the zone. This coating may comprise at least one of: antibodies, aptamers, or lectins. Antibodies, or aptamers, or lectins may have an affinity to specific cell categories but not to other cell categories. Antibodies, or aptamers, or lectins may bind to specific cell categories but not to other cell categories. Antibodies, or aptamers, or lectins may have a high sensitivity in binding to a cell category. Thus, the percentage of true positive binding events may be high. Antibodies, or aptamers, or lectins may have a high specificity in binding to a cell category. Thus, the percentage of true negative binding events may be high. Alternatively, the molecules coating at least one CMM surface of the at least one zone of the flow channel may comprise other molecules than antibodies, aptamers, and lectins, e.g. comprise other molecules that binds specifically to a cell membrane molecule.

The at least one zone of the flow channel may be configured to modify the movement of the cell belonging to the associated cell category of the zone by modifying e.g. the speed, direction or path of cells comprised in the cell category. For example, the at least one zone of the flow channel may be configured to modify the movement of the cell belonging to the associated cell category of the zone by binding and releasing the cell belonging to the associated cell category of the zone. Such a movement may be termed a bind-release movement. Thus, the at least one zone may be configured not to bind a cell indefinitely. Binding and releasing the cell may temporarily halt the cell along its travel. Such a modified movement in the form of a modified speed may be detectable and tracked. The cell may not necessarily bind and release at the same point of the at least one zone. The zone may be configured to let a cell bind to the at least one zone, roll a distance along the at least one zone and then release from the at least one zone in a bind-roll-release movement. The cell may e.g. roll along a surface of the at least one zone in a direction different from the direction of the flow of liquid. Thus, the direction or path of a cell belonging to a category associated with the at least one zone may be different from the path of a cell belonging to a category not associated with the at least one zone. Such a modified movement in the form of a modified direction or path may be detectable.

Thus, a modified movement may be a revealing sign which enables the cell category of a cell to be determined with high accuracy. It may e.g. be very improbable that a cell exhibits a modified movement, e.g. a bind-release movement or a bind-roll-release movement at a zone without having an affinity to the molecules of the zone. Thus, the probability of false positive detection events may be low.

The flow channel comprises a sorting channel arranged after the at least one zone. The sorting channel has a width for presenting the biological cells in a queue one-by-one. Thus, after having passed the at least one zone, the biological cell reaches the sorting channel. As the sorting channel has a width for presenting the biological cells in a queue one-by-one, the individual cells may be identified by their modified movement through the at least one zone before entering the sorting channel.

The sorting channel may be split into several channels after the sorting element, such that the cells may be divided into further channels depending on the identification of the cell category.

The device comprises a first detector. The first detector is configured to detect one modified movement of a cell in a zone, e.g. one bind and release event, a halt of motion, a change of speed, a change of direction, or a change of path, and thereby identify the cell as belonging to the cell category associated with the zone and generate the trigger signal. Alternatively, the detector may be configured to detect a threshold number of modified movements of a cell in a zone, e.g. the cell displaying at least 2, at least 5, or at least 10 bind and release events within the zone, and thereby identify the cell as belonging to the cell category associated with the zone and provide input to the sorting element.

The device further comprises a second detector for verifying an order of the biological cells in the queue or detecting a change in the order of the biological cells in the queue. When the biological cells move through the flow channel, passing the zone and reaching the sorting channel, the cells are, due to the width of the sorting channel, forced from a random order movement into a queue of one-by-one. When reaching the queue, the order of the cells is relevant since each cell is categorized by its movement when passing the at least one zone. Thus, each cell may be tracked and a position of the cell may be known when reaching the queue. However, the order of the cells needs also to be known when the cells reach the sorting element, such that the sorting element may be triggered to act on a correct cell in the queue. Thus, the second detector verify the order of the cells in the sorting channel or identify an eventual change in the order of the cells. For example, two or more cells may switch order during the line up to the queue for entering the sorting channel or after having entered the queue. When doing so, the characterization of each of the cells is lost since there are no further way of connecting the cell to its modified movement and thereby the cell category. This information is provided to the sorting element to influence how the sorting is made.

The device comprises a sorting element configured to act on the biological cells in the queue. The sorting element selectively affects a biological cell of the queue based on the order of the biological cells in the queue and the classification of the biological cell. Thus, the input from the first detector and the second detector may be used to decide on how the sorting element affect each of the biological cells.

The device enables cell sorting. In particular, the device enables label-free cell sorting as the cells do not need to be labelled. Cells belonging to a certain category may be detected, e.g. identified, based on if they display a modified movement, and subsequently diverted. Label-free cell sorting is advantageous as labels often need to be removed from the cells after sorting and before further analysis or further processing of the cells is performed. The removal of labels may be performed in a washing process which may be costly, bulky and damaging to the cells. Cell sorting may herein mean separating cells belonging to a cell category from cells not belonging to the cell category. Cells that are intended to be sorted out, separated from the other cells, may hereinafter be referred to as target cells.

It is a realization that a device according to the first aspect facilitates active label-free cell sorting. This, in turn, enables a label-free cell sorting device which is accurate, compact, has a high cell throughput, is cost-effective, and is reprogrammable. By detecting a modified movement at a surface of the zone, a target cell may be identified and then actively sorted by the sorting element.

The first aspect enables accurate cell sorting devices. A modified movement may be a revealing sign which enables the cell category of a cell to be determined with high accuracy. It may e.g. be very improbable that a cell exhibits a modified movement, e.g. a bind-release movement or a bind-roll-release movement at a surface of the zone without having an affinity to the molecules coating the surface of the zone. Thus, the probability of false positive detection events may be low. Further, the sorting element may deterministically divert a cell. Thanks to the detections of the second detector, a high percentage of detected cells may be diverted to the correct outlet. In contrast, a passive device may rely on the stochastic diversion of cells based on multiple stochastic interactions with adsorbing regions.

The first aspect enables cost-effective cell sorting devices. This may be a consequence of the device being compact and/or having a high cell throughput. Less material may thereby be needed to manufacture the device.

The first aspect enables reprogrammable cell sorting devices. In an active cell sorting device, it may be possible to change which type of modified movement should generate the trigger signal and/or how many modified movements should be needed for the sorting element to act on the cells, depending on circumstances. For example, if a higher sensitivity and/or specificity in the sorting is needed a higher threshold number of modified movements of a cell in a zone may be required to generate the trigger signal. Further, in an active cell sorting device, it may be possible to change which outlet the target cells should be diverted to. Thus, if the flow channel further comprises several channels following the sorting channel, the cells may be sorted into any of the further channels. For instance, a device comprising a plurality of zones may be able to categorize cells according to a plurality of cell expressions. This may give rise to a cell sorting into several different categories.

The device may sort cells in-vitro. The device may e.g. be used for sorting cells to be used in cell therapy. In cell therapy large amounts of cells may need to be introduced into a patient in order to boost the immune system of the patient. One step in generating the immune-system-boosting cells may be to perform cell sorting, advantageously label-free cell sorting. For example, in CAR-T cell therapy, T-cells are derived from a blood sample by sorting out T-cells from other peripheral blood mononuclear cells (PBMCs) such as monocytes, lymphocytes, B cells and NK cells. The T-cells may subsequently be genetically engineered to express new chimeric antigen receptors (CAR) that will boost the patient's immune system. A cell sorting device with high cell throughput may herein be advantageous as this may reduce the processing time of the blood sample and thereby the survival rate of the cells.

The sorting element is arranged downstream from the at least one zone of the flow channel. Thus, a cell exhibiting at least one modified movement is detected by the first detector at a point the flow channel. The cell is further detected by the second detector and the order of the cells is determined. The cells are then be diverted by the sorting element at a point or in a region of the sorting channel. Consequently, data are acquired during the travel of the cells through the flow channel. The data are then used to accurately divert the correct cells further downstream. When data relating to modified movements of the cells is collected at several points of the flow channel the accuracy of the sorting may be high.

The flow channel may further comprise a plurality of regions. At least one of the plurality of regions comprises the at least one zone. The biological cell may exhibit a first speed in a first region and a second speed in a second region, the first speed being lower than the second speed. Thus, a cell belonging to a cell category may have a movement being affected by both the at least one zone being associated with the cell category and a speed of the movement differing between the first and the second region.

The first detector may comprise an imaging sensor. The imaging sensor may be configured to sequentially image the biological cell flowing through the plurality of regions, wherein the biological cell in consecutive images has moved a distance below a threshold value, wherein the imaging sensor is configured to acquire frames, wherein a frame rate associated with the first region is set such that, between consecutive frames, a distance travelled by a supposed biological cell moving at the second speed is larger than the threshold value. The frame rate associated with the second region may be set such that, between consecutive frames, a distance travelled by the biological cell moving at the second speed may be below the threshold value. The threshold may be set to below 5 times of a pixel size of the imaging sensor. Thus, the cell moves less than five pixels of the imaging sensor between two images acquired by the imaging sensor.

The speed of a biological cell may be affected by for instance the width of the flow channel. Thus, a flow channel having different widths at different locations of the channel may affect the speed of the flow of liquid carrying the cells. As an example, the flow channel may have an inlet having a wide width setting the flow of liquid at a medium speed. In this part of the channel all cells should have a similar speed. Next, the flow of liquid may enter the at least one zone. As the flow of liquid may carry cells belonging to the cell category of the at least one zone as well as cells not belonging to the cell category of the at least one zone, the speed may vary between the cells. Even if the flow of liquid only comprises cells belonging to the cell category to the at least one zone, the interaction between the at least one zone and the biological cells may slow down the speed of all cells. Thus, the speed of the cells being inside of the at least one zone may differ from the cells entering the inlet of the flow channel. Last, the flow channel may again have a different width. For example, the sorting channel having a width for presenting the biological cells in a queue one-by-one changes the speed of the cells.

The speed of the cells within a region of the flow channel may be an interval of speeds. Thus, the speed may vary within a region, due to interaction with the zone causing a modified movement or for other reasons such that a varying flow. However, the second speed may always be larger than the first speed.

The imaging sensor may be configured to sequentially image the biological cell flowing through the plurality of regions. Thus, a plurality of images may be acquired while the cell is moving through the flow channel. The sequential images may be acquired as a time-lapse movie of the cells. A biological cell in consecutive images moves a distance below a threshold value between two sequential images. Thus, between two sequential images the cell has not moved too far. It is a realization that keeping the imaging at a rate where the cell has moved below a threshold value allows the imaging to capture the individual cells at all times, leading to no blind gaps of the cell between two consecutive images.

The imaging sensor may further be configured to acquire frames. The frame rate associated with the first region is set such that, between consecutive frames, a distance travelled by a supposed biological cell moving at the second speed is larger than the threshold value. The supposed cell should be understood as an imaginary cell moving at the second speed. Thus, the distance travelled by the supposed cell is the distance that would be travelled by such a cell if there would be such a cell traveling through the first region. When moving through the flow channel, an actual biological cell has, different speed in each or some of the plurality of regions. In the first region, the speed is lower than in the second region. Thus, the frame rate of the first region is not set in relation to what is needed in the second region, but at a lower frame rate. Thus, processing requirements for forming the images of the first region may be lenient and not forced to meet frame rates that may be needed for the second region.

In the second region, the frame rate may be set such that the actual biological cell moving at the second speed has not moved above a threshold value between two consecutive frames. In the second region, the speed of the actual biological cells is high and, therefore, the frame rate may be set such that the biological cell moving at the second speed is not allowed to move a large distance between two frames.

When the cells move through the flow channel, the different speeds occurring in the plurality of regions leads to a challenge in covering all cells at all times with the imaging sensor. It is a realization that the combination of the sequential images and the frame rate of the imaging sensor can solve this problem, as the imaging and the acquisition of frames may be adapted to the speed within the different regions.

Thus, for an accurate sorting by the sorting element, it may be an advantage to have the sequential imaging and the acquired frames such that the information provided from the first detector to the sorting element is accurate.

According to one embodiment the first detector may be an imaging sensor configured to detect an interference pattern by receiving object light, which is incident on the imaging sensor after having interacted with the biological cells, and reference light, which is incident on the imaging sensor without having interacted with the biological cells, the imaging sensor may be configured to detect the flow of liquid in the flow channel at least in one zone of the flow channel to track the biological cells through the at least one zone such that the modified movement is identified and the cell is classified into the cell category.

The device may further comprise an illumination source. The illumination source may be configured to illuminate a cell in the flow channel, such that an interference pattern is formed by interference between object light having interacted with the biological cells and reference light which has not interacted with the biological cells.

Thus, the device may operate according to the principles of digital holographic imaging. Such a device may enable a high cell throughput. An imaging sensor of a device operating according to the principles of digital holographic imaging may have a large field of view since a lens may not be needed between the image sensor and the flow channel. Further, an imaging sensor of a device operating according to the principles of digital holographic imaging may have a large depth of focus. Consequently, the imaging sensor may monitor a large area or a large volume, of the flow channel, for cells exhibiting modified movements. Monitoring a large area or volume simultaneously makes it possible to maintain a high flow rate and a high cell throughput.

The non-scattered light from the illumination source may be passed along a common optical path with the light being scattered by the cells. Thus, the interference pattern may be formed between scattered and non-scattered light at the image sensor in a so-called in-line holography set-up. Thus, the scattered and non-scattered light may share the same light path. However, according to an alternative, the non-scattered light may be passed along a separate reference light path, which is combined with the light having been scattered by the cells before reaching the image sensor. In such case, the light scattered by the cells may be either forward or backward scattered light.

The illumination source may be configured to emit at least partially coherent light. Coherent light may be advantageous as it may improve the interference visibility. A coherent illumination source may be a laser. However, it should be understood that also partially coherent light may provide an interference pattern with sufficient visibility. A partially coherent illumination source may e.g. be a light emitting diode which emits light directly onto the flow channel or through a pinhole onto the flow channel. A coherent illumination source may provide better interference visibility but be more expensive while a partially coherent illumination source may provide a worse interference visibility but be less expensive.

According to one embodiment the second detector may be an imaging sensor configured to detect an interference pattern by receiving object light, which is incident on the imaging sensor after having interacted with the biological cells, and reference light, which is incident on the imaging sensor without having interacted with the biological cells, the imaging sensor may be configured to detect the flow of liquid in the sorting channel to track the biological cells entering the sorting channel such that the order of the biological cells in the queue can be verified or such that a change in the order of the biological cells in the queue can be detected.

It should be understood that the imaging sensor comprised in the second detector may be the same imaging sensor as the one comprised in the first detector, wherein the first detector is formed by a first portion of the imaging sensor configured to image the flow of liquid through the at least one zone of the flow channel, whereas the second detector is formed by a second portion of the imaging sensor configured to image the flow of liquid in the sorting channel. However, it may also be a different imaging sensor from the one comprised in the second detector.

According to one embodiment the second detector may comprise a first cell interval detection unit configured to detect a first time interval between two consecutive biological cells at a first location in the flow channel in the sorting channel or close to an inlet of the sorting channel, and a second cell interval detection unit configured to detect passage of cells at a second location in the sorting channel for detecting a second time interval between the two consecutive biological cells such that the order of the biological cells in the queue can be verified or a change in the order of the biological cells in the queue can be detected.

The first cell interval detection unit may be configured to detect the first time interval based on using a region in an imaging sensor which is also used by the first detector.

The second cell interval detection unit could act as a trigger for the sorting element.

This embodiment is based on the fact that the cells while entering the sorting channel moves at an equal speed. Thus, the distance between a first cell and a second cell may be almost the same while passing the first cell interval detection unit as while passing the second cell interval detection unit. Thus, the time interval between two cells at first cell interval detection unit may be compared to the time interval between the same two cells at the second cell interval detection unit. If the time intervals at the two detection units differs a lot, it may imply that a change in cell order has changed, and the cell sorting may not be accurate based on that the cell identification from the first detector may be lost.

According to one embodiment the device may further be configured to pass a flow of liquid carrying markers at least through the sorting channel.

The markers may be carried by the flow of liquid from an inlet of the flow channel, thus from the start of the flow channel and through the entire flow channel until reaching the sorting channel. Alternatively, the device may comprise a second inlet arranged in the flow channel close to the sorting channel, such as between the at least one zone and the sorting channel.

The markers may comprise polystyrene beads, magnetic beads, fluorescence beads, other synthetic particles or specific biological cells with (optical) properties significantly different than the cells of interest in flow channel.

The main distinct feature of the markers may be the optical properties of the markers. Thus, any marker being non-invasive to the cells but having different optical properties may be used. It may be an advantage if the markers have the same mechanical and/or fluidic properties as the biological cells, to ensure similar flow behavior with cells of interest.

The markers may be detected by at least the second detector. However, the markers may as well be detected by the first detector and the second detector. The number of markers between each of the cells may be used to confirm that the order of the cells remains the same while queueing into the sorting channel. As an example, a first cell may be detected by a section of the second detector. After the first cell, 10 markers are detected before a second cell is detected. When moving ahead in the sorting channel, a second section of the second detector detects the first cell, the 10 markers and the second cell. Then, the second detector may confirm to the sorting element that the cell categorization already provided by the first detector for each of the cells still is valid and the sorting element may sort the cells. If, on the other hand, the number of markers are changed to for example 5, the second detector may provide the sorting element with the information that the cell categorization may not be valid. If the number of markers between the cells has changed significantly, it may be because the cells has changed order, or a third cell may have entered between or before the first and second cell. This may cause errors in the upcoming sorting by the sorting element, which should be communicated to the sorting element.

According to one embodiment the second detector may comprise a first marker counter configured to detect a first number of markers between two consecutive biological cells in a first count at a first location in the flow channel in the sorting channel or close to an inlet of the sorting channel, and a second marker counter configured to detect a second number of markers between the two consecutive biological cells in a second count at a second location in the sorting channel for verifying the order of the biological cells in the queue or detecting a change in the order of the biological cells in the queue based on the first and the second numbers being equal or different.

The first marker counter and the second marker counter may be a part of the first detector and second detector respectively. Alternatively, both of the first marker counter and the second marker counter may be a part of the second detector.

The first marker counter and the second marker counter may communicate with the sorting element such that the information of the number of markers at each point may be provided to the sorter element. The sorting by the sorter element may be made based on the information form the first marker counter and the second marker counter.

According to one embodiment the sorting element is a bubble sorter.

Thus, the sorting element may be a bubble sorter which upon information based on the detection from the first detector and the second detector pushes out a bubble at the exact moment when a particular cell is passing the bubble sorter such that the bubble hits the cell and forces it in a certain direction. The bubble sorter may comprise two parts arranged on opposite sides of each other of the sorting channel such that cells can be pushed in two directions.

Alternatively, the sorting element may be configured to divert the detected cell within the flow of liquid in the sorting channel by either:
- creating an electric field within the flow of liquid; or
- creating a jet flow within the flow of liquid by heating the liquid; or
- creating a surface acoustic wave along an inner surface of the sorting channel.

By creating an electric field within the flow of liquid the detected cell may be diverted through dielectrophoresis. The electric field may be applied transverse to the flow direction of the flow of liquid. The electric field may be in the range of 0.1 to 10 MV/m and alternate at a frequency ranging from 1 KHz to 1 MHz.

By creating a jet flow within the flow of liquid by heating the liquid the detected cell may be diverted using a simple heater, e.g. a resistive heater.

By creating a surface acoustic wave (SAW) along an inner surface of the sorting channel the detected cell may be subjected to an acoustic radiation force that diverts the cell. The sorting element may be configured to provide the SAW with a propagation direction transverse to the flow direction of the flow of liquid. The sorting element may comprise an interdigitated transducer. The interdigitated transducer may comprise interdigitated electrodes on a piezoelectric substrate. The piezoelectric substrate may be the inner surface of the sorting channel or be connected to the inner surface of the sorting channel.

According to one embodiment the device further comprises a processing unit, wherein the processing unit is configured to receive data detected by the first detector and the second detector and to process the data for classifying a biological cell exhibiting at least one modified movement in one zone of the flow channel into the cell category and for verifying an order of the biological cells in the queue or detecting a change in the order of the biological cells in the queue, wherein the processing unit is further configured to send a control signal to the sorting element for triggering the sorting element to selectively affect the biological cell of the queue.

Thus, the processor may use the information from the first detector and the second detector to 1) classify the cells into the correct cell category based on the possible interaction with the at least one zone, causing a modified movement, 2) decide the order of the cells and connect the classification of the cells to the order of the cells, and 3) confirm the order of the cells further in the sorting channel such that the sorting element may get the correct information for triggering the sorting element to selectively affect the biological cell of the queue.

For instance, a cell belonging to the cell category of choice may be affected by the sorting element to reach a certain channel after the sorting channel. However, it may alternatively be such that the cells not belonging to the cell category are affected by the sorting element such that only cells belonging to the cell category continues to move along the sorting channel.

The device may comprise a tracker configured to track the detected cell in the flow channel. The tracker may be configured to monitor the position of a detected cell in the flow channel over a time-sequence from the cell entering the flow channel, the detection of the cell exhibiting the modified movement until the cell enters the sorting channel. The tracker may be a processor monitoring the position of a detected cell based on information from the image sensor.

The use of a tracker allows a modified movement of a cell to be detected anywhere when the cell passes through the zone. This facilitates the imaging sensor monitoring a large area or a large volume, of the flow channel, for cells exhibiting modified movements such that a high cell throughput may be achieved.

The processing unit may comprise the tracker. Thus, the processing unit may both track the cells and analyze the tracking to identify modified movements.

According to a second aspect, there is provided a method for sorting biological cells, the method comprising:
detecting, by a first detector, a biological cell to be sorted, carried by a flow of liquid, exhibiting at least one modified movement, passing at least one zone in a flow channel, wherein
   each zone of the flow channel is associated with a cell category, wherein the zone of the flow channel is configured to modify movement of the biological cell in dependence of the biological cell belonging to the cell category;
   the flow channel comprises a sorting channel arranged after the at least one zone, the sorting channel having a width for presenting the biological cells in a queue one-by-one;
detecting, by a second detector, the order of the biological cells in the sorting channel for verifying the order of the biological cells in the queue or detecting a change in the order of the biological cells in the queue;
sorting, by a sorting element, the biological cells in the queue, wherein the sorting element selectively affects a biological cell of the queue based on the order of the biological cells in the queue and the classification of the biological cell.

This aspect may generally present the same or corresponding advantages as the former aspect.

The detection of the biological cell, by the first detector, may comprise detecting the same biological cell for several times such that the modified movement may be detected. However, it may also comprise detecting interactions between the biological cell and the zone.

The detection of the order of the biological cells, at the second detector, allows for the sorting element to sort the cells in the correct way. The information of cell category from the first detector may be combined with the information on cell order, such that a specific cell and its cell category can be further used by the sorting element to correctly sort the cells.

According to one embodiment the detecting, by the first detector, may further comprise:
tracking, in a first tracking, the modified movement exhibited by the biological cell;
and wherein the detecting, by the second detector, further comprises:
tracking, in a second tracking, of the biological cells of the queue.

The tracking may comprise following the same biological cell through several detection points.

The first detector may be a first imaging sensor. The second detector may be a second imaging sensor. The cell may be tracked throughout a plurality of images acquired, such as through a timelapse. The first imaging sensor may in one field of view cover the entire flow channel or the first detector may comprise a plurality of imaging sensors together covering the entire flow channel up until the sorting channel, such that the cell moving though the flow channel may be tracked through the entire flow channel. When entering the sorting channel, the second detector takes over the tracking and continues to follow the cell at least until it reaches the sorting element.

According to one embodiment the method may further comprise:
analyzing the first tracking and the second tracking to verify the order of the biological cells in the queue or detecting a change in the order of the biological cells in the queue.

By using the first tracking and the second tracking, the cell can be categorized (by the first tracking) and the identification of the cell can still be maintained during queuing (by the second tracking) such that the sorting element can accurately sort the cells.

According to one embodiment the detecting of the order of the biological cells in the queue may further comprise determining a first time interval between two consecutive biological cells at a first location in the flow channel in the sorting channel or close to an inlet of the sorting channel, and determining a second time interval between the two consecutive biological cells at a second location in the sorting channel, wherein the method may further comprise:
analyzing the first time interval and the second time interval to verify the order of the biological cells in the queue or detecting a change in the order of the biological cells in the queue.

The detection of the order of the biological cells in the queue determining the first time interval between two consecutive cells may be made by the first detector or by the second detector. The first time interval may give the information on the cell order in relation to the cell category determined by the first detector. Comparing the first time interval to the second time interval may give information on whether the cell order is the same or if it has changed. A changed time interval may indicate that the cells are no longer in the same order in the queue and the identification of the cell belonging to the cell category may no longer be accurate. This is important for the further cell sorting element.

According to one embodiment the detecting of the order of the biological cells in the queue may further comprise counting markers carried by the flow in-between two consecutive biological cells in a first count at a first location in the flow channel in the sorting channel or close to an inlet of the sorting channel, and counting markers carried by the flow in-between the two consecutive biological cells in a second count at a second location in the sorting channel, wherein the method may further comprise:
analyzing the first count and the second count to verify the order of the biological cells in the queue or detecting a change in the order of the biological cells in the queue.

Having the same amount of markers between two consecutive cells, at the first count and at the second count can confirm that the cells are in the same order. Then, the cell categorization from the first detector may still be correct. However, if the first count and the second count reveals large differences the cell order may be incorrect and the cell categorization may no longer be correct.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a device for sorting biological cells according to a first embodiment.
Fig. 2 is a device for sorting biological cells according to a second embodiment.
Fig. 3 is a device for sorting biological cells according to a third embodiment.
Fig. 4 is a flowchart of a method for sorting biological cells.

### Detailed description

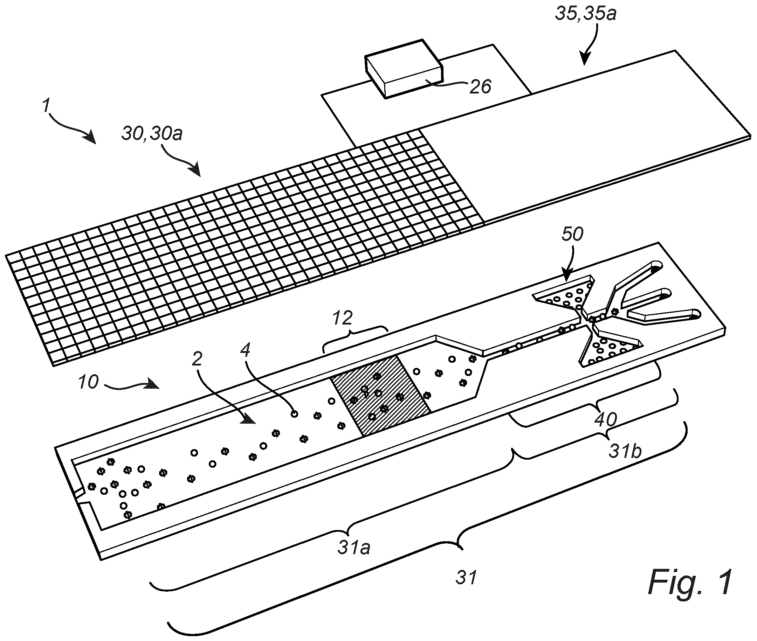

Fig. 1 illustrates a device 1 for sorting biological cells 4 according to a first embodiment. The device 1 comprises a flow channel 10 configured to pass a flow of liquid 2. The flow of liquid 2 carries the biological cells 4 to be sorted. The biological cells 4 may belong to a cell category. The cell category can be identified by for instance the expression of antigens on the cell surface. A first cell category may be defined as cells 4 having a cell membrane comprising CD4 antigens and a second cell category may be defined as cells 4 having a cell membrane comprising CD8 antigens. The biological cells 4 may be separated based on their cell category, which is identified using the device 1.

The flow channel 10 may be a microfluidic channel. The flow channel 10 may be defined by conventional lithography and sealed with a transparent cover slide, e.g. glass, polydimethylsiloxane (PDMS), or polycarbonate. The top part of the flow channel 10 may be covered with a cover slide, e.g. a glass slide, bonded to the PDMS.

The flow channel 10 comprises at least one zone 12. While moving through the flow channel 10 the biological cells 4 pass through the at least one zone 12. The flow channel 10 may comprise a plurality of zones. The biological cells 4 may then pass through the zones from the first to the last zone.

Each zone 12 of the flow channel 10 is associated with a cell category. The side walls, the bottom and/or top and/or obstacles in the zone 12 may be covered by a surface comprising molecules having an affinity for the cells 4 of the cell category. The molecules may be e.g. antibodies, aptamers, or lectins. For instance, the molecules may be anti-CD4 antibodies and the zone is thus then associated with cells belonging to the CD4 category. Alternatively, the molecules may be anti-CD8 antibodies, and the zone is thus then associated with cells belonging to the CD8 category.

The zone 12 of the flow channel 10 is configured to modify movement of the biological cell 4 in dependence of the biological cell 4 belonging to the cell category.

The biological cells 4 may for instance hit the side walls, the bottom and/or top and/or obstacles in the zone 12 covered by the surface comprising molecules having an affinity for the cells 4 of the cell category during the travel through the channel 10. The modified movements may be expressed as cells 4 taking a characteristic type of path if they interact with the surface of the zone 12. A cell 4 belonging to the cell category associated with the zone 12 may for instance take a more undulating path in the zone 12 than in other parts of the channel 10. The molecules may bind and release a cell 4 belonging to the associated cell category of the zone 12. For example, an anti-CD4 antibody may bind to a cell 4 having a cell membrane comprising CD4 antigens, and subsequently release the cell. Thus, the movements of a cell 4 of the cell category moving through the zone 12 may change in a characteristic way that makes it possible to identify the cell as belonging to the cell category. When a cell 4 belongs to a category associated with a zone 12 the cell 4 may, in that zone 12, exhibit e.g. a bind and release event, a halt of motion, a change of speed, a change of direction, or a change of path.

The flow channel 10 comprises a sorting channel 40. The sorting channel is arranged after the at least one zone 12. The sorting channel 40 has a width for presenting the biological cells 4 in a queue one-by-one. The width of the sorting channel may be as small as the diameter of a single biological cell.

The width of the flow channel 10 may vary, as illustrated in Fig 1. Thus, the width of the flow channel 10 before the sorting channel 40 is broader than the width of the sorting channel 40. This may affect the speed of the biological cell 4 moving through the flow channel.

The flow channel may therefor be divided into regions 31, as illustrated in Fig 1. The plurality of regions 31 may overlap with the at least one zone 12. The number of regions 31 may differ, depending on for instance the shape of the flow channel 10. A region 31 may for instance cover a part of the flow channel 10 having the same dimensions through the entire region 31, and a new region may start if the flow channel 10 changes dimensions. For instance, the sorting channel 40 may be part of a region 31b which has a smaller width than another region 31a.

The biological cell 4 exhibits a first speed in a first region 31a and a second speed in a second region 31b. The first speed is lower than the second speed. As is illustrated in Fig. 1, the first region 31a has a uniform width, while the second region 31b has a progressively smaller width as compared to the first region 31a. The first region 31a covers the zone 12, while the second region 31b covers the sorting channel 40. When the biological cells 4 moves through the flow channel 10, from the first region 31a to the second region 31b, the speed increases as the flow of liquid 2 carrying the cells 4 are forced from the broader width first region 31a to the smaller width second region 31b. When reaching the sorting channel 40 the biological cells 4 line up one-by-one in a queue due to the width of the sorting channel 40.

The device 1 further comprises a first detector 30 configured to detect a biological cell 4 exhibiting at least one modified movement in one zone 12 of the flow channel 10 for classifying the biological cell 4 into the cell category.

The first detector 30 may be arranged above or below the flow channel 10. However, it should be understood that the first detector 30 may be arranged on the sides of the first channel 10 as well. The first detector may be arranged to cover only the at least one zone 12 of the flow channel 10, or alternatively arranged to cover a larger area of the flow channel 10. For instance, the first detector 30 may be arranged to cover the flow channel 10 before and after the at least one zone 12 as well as covering the zone 12.

The first detector 30 detects the biological cell 4 moving through the flow channel 10 such that the movement of the biological cell 4 is detected. The movement may, as has already been discussed, be altered when passing though the zone 12. This may reveal that the biological cell 4 belongs to the cell category associated with the zone 12. Thus, detecting the movement of the biological cell 4 may be used to categorize the cell, information which is provided to a sorting element 50 of the device 1.

The first detector 30 may be an imaging sensor 30a configured to detect an interference pattern by receiving object light, which is incident on the imaging sensor 30a after having interacted with the biological cells 4, and reference light, which is incident on the imaging sensor 30a without having interacted with the biological cells 4. The imaging sensor 30a may be configured to detect the flow of liquid 2 in the flow channel 10 at least in one zone 12 of the flow channel 10 to track the biological cells 4 through the at least one zone 12 such that the modified movement is identified and the cell 4 is classified into the cell category.

Thus, the first detector 30 may operate according to the principles of digital holographic imaging.

The first detector 30 may comprise a plurality of photo-sensitive elements configured to detect incident light. The first detector 30 may herein be a CCD or CMOS camera. The first detector 30 may acquire a time-sequence of image frames of the changing interference pattern as cells 4 pass the first detector 30.

A modified movement may be detected as an interaction between the zone 12 and the biological cell 4 in a single detection point or as a collection of several detection points where more than one interaction between the zone 12 and the biological cell 4 may be detected.

The device 1 further comprises a second detector 35 for verifying an order of the biological cells 4 in the queue or detecting a change in the order of the biological cells 4 in the queue. The second detector 35 thus detects in what order biological cells 4 are. The second detector 35 is arranged close to the inlet of the sorting channel 40 or in the sorting channel 40. The second detector 35 may cover a larger part of the sorting channel 40. The second detector may preferably detect the order of the biological cell 4 at a plurality of locations before or in the sorting channel 40. This is to first establish the order of the biological cells 4 and then to confirm if the order of the cells 4 is maintained the same or if they have changed order.

Changing of order may happen when the biological cells 4 are lined up in the queue for the sorting channel 40. As the sorting channel 40 only allows for the cells to queue one-by-one, the cells 4 may be close to each other and the cells 4 may change places before entering the sorting channel 40 or after entering the sorting channel 40.

Changing of order of the cell 4 may give rise to a less accurate sorting, since the sorting is based on the categorization of the cells. Since the device is label free, there are no external markers for identifying the cells 4, but the classification from the first detector 30 must be kept with the correct cell 4 through the sorting channel 40.

The second detector 35 may be an imaging sensor 35a configured to detect an interference pattern by receiving object light, which is incident on the imaging sensor 35a after having interacted with the biological cells 4, and reference light, which is incident on the imaging sensor 35a without having interacted with the biological cells 4, the imaging sensor 35a being configured to detect the flow of liquid 2 in the sorting channel 40 to track the biological cells entering the sorting channel 40 such that the order of the biological cells 4 in the queue can be verified or such that a change in the order of the biological cells 4 in the queue can be detected.

Thus, the second detector 35 may operate according to the principles of digital holographic imaging.

The second detector 35 may comprise a plurality of photo-sensitive elements configured to detect incident light. The second detector 35 may herein be a CCD or CMOS camera. The second detector 35 may acquire a time-sequence of image frames of the changing interference pattern as cells 4 pass the second detector 35. The time-sequence of images may be used to confirm that the order of the cells 4, over the time sequence, are kept, or to confirm that a change in the order have happened.

The imaging sensor 35a may be comprised in the same imaging sensor 30a as covering the at least one zone 12 forming a different portion of the imaging sensor. However, the imaging sensor 35a may be a different imaging sensor from the imaging sensor 30a covering the at least one zone 12.

The first detector, if being an imaging sensor 30a, may be configured to sequentially image the biological cell 4 flowing through the plurality of regions 31, into which the flow channel 10 may be divided. Thus, images of the flow channel 10 are sequentially acquired. The biological cell 4 in consecutive images has moved a distance below a threshold value. Thus, the biological cell 4 has between two images moved below the threshold value, such that the biological cell 4 is imaged by two sequential images. In other words, when the biological cell 4 moves through the flow channel 10, images should be acquired in such a rate that there is only a short distance moved by a cell between two consecutive images. Thus, the threshold should be so low that a cell can be tracked between two consecutive images. When cells move, they interact with other cells and additionally they may have a random movement pattern. Thus, it is advantageous to acquire images at a rate where the cells 4 have not moved too far between two images such that the tracking can be accurate. It is especially advantageous when the tracking is used to identify the modified movement when the cell 4 passes through the zone 12. Then, differences between cells of the cell category interacting with the zone 12 must be distinguishable from the cells not belonging to the cell category and which do not interact with the zone 12. The threshold may be set to below 5 times of a pixel size of the imaging sensor.

The imaging sensor 30 may be configured to acquire frames. Each frame may correspond to a single read-out of information from the imaging sensor 30 and hence a single exposure of the flow channel 10 imaged by the imaging sensor 30. The frames may image the same cell several times in the same frame. This may be achieved by using a pulsed illumination at a frequency higher than the frame rate.

A frame rate associated with the first region 31a is set such that, between consecutive frames, a distance travelled by a supposed biological cell moving at the second speed is larger than the threshold value. Thus, the supposed cell is an imaginary cell moving at the second speed. Thus, the distance travelled by the supposed cell is the distance that would be travelled by such a cell if there would be such a cell traveling through the first region 31a. When moving through the flow channel 10, an actual biological cell 4 has the first speed in the first region 31a and the second speed in the second region 31b. The first speed being lower than the second speed. The frame rate is set such that, when moving at the second speed the supposed biological cell moves longer than the threshold value between two consecutive frames acquired in the first region 31a. Thus, the frame rate of the first region 31a is too low to accurately image the supposed cell moving at the speed of actual cells in the second region. However, the frame rate of the first region 31a is high enough to capture an actual cell while moving in the first region 31a. Thus, the imaging sensor 30 is not required to have a high frame rate, even though such a high frame rate may be needed for allowing correctly tracking cells in other regions of the flow channel.

The second detector 35, if being an imaging sensor 35a, may as well be configured to sequentially image the biological cell 4 flowing through the sorting channel 4. The imaging sensor 35a may also be configured to acquire frames. The frame rate associated with the second region 31b may then be set such that, between consecutive frames, a distance travelled by the biological cell 4 moving at the second speed is below the threshold value. Thus, between consecutive frames of the second region 31b the cell has not moved farther than the threshold value and the biological cell 4 is imaged at a frame rate sufficient to capture the movement.

Thus, as the cells moves into the sorting channel 40 the speed of the cells is higher than before since the width of the sorting channel is smaller.

The device further comprises a sorting element 50 configured to act on the biological cells 4 in the queue. The sorting element 50 selectively affects a biological cell 4 of the queue based on the order of the biological cells 4 in the queue and the classification of the biological cell 4.

Thus, by using information from the first detector 30, detecting the classification of the cell 4, and from the second detector 35, using the order of the cells 4 to match the cell 4 to its classification, the sorting element 50 can act on the biological cells 4.

Illustrated in Fig. 1, the sorting channel 40 is split into three different channels. It is to be understood that the number of channels are illustrative and may be changed depending on the configuration of the device 1. For instance, a device 1 with one zone 12 may have a division into two channels; one for cells belonging to the cell category associated with the zone 12 and one for the cells not belonging to the cell category. Then, the sorting element may act on the cells 4 such that they move in different directions out of the sorting channel 40 to reach different final destinations. Alternatively, a device 1 with two zones 12 being associated with two different cell classifications may be divided into three channels; one for the cells belonging to the cell category of the respective zone 12 and one for cells not belonging to any of the cell categories.

If the order of the cells 4 are changed such that the classification can no longer be accurately associated with a cell, the cells which have changed order may all be classified as cells not belonging to a cell category such that false positive cells are not sorted as positive cells.

The sorting element 50 may be a bubble sorter. The bubble sorter acts on the biological cells 4 by evacuating bubbles on the biological cells 4 to steer them in the right direction after passing the sorting element 50.

The sorting element 50 may further be configured to divert the detected cell 4 within the flow of liquid 2 in the sorting channel 40 by either:
- creating an electric field within the flow of liquid 2; or
- creating a jet flow within the flow of liquid 2 by heating the liquid 2; or
- creating a surface acoustic wave along an inner surface of the sorting channel 40.

By creating an electric field within the flow of liquid 2 the detected cell 4 may be diverted through dielectrophoresis. The electric field may be applied transverse to the flow direction of the flow of liquid 2. The electric field may be in the range of 0.1 to 10 MV/m and alternate at a frequency ranging from 1KHz to 1MHz.

By creating a jet flow within the flow of liquid by heating the liquid 2 the detected cell 4 may be diverted using a simple heater, e.g. a resistive heater.

By creating a surface acoustic wave (SAW) along an inner surface of the sorting channel 40 the detected cell 2 may be subjected to an acoustic radiation force that diverts the cell 2. The sorting element 50 may be configured to provide the SAW with a propagation direction transverse to the flow direction of the flow of liquid 2. The sorting element 50 may comprise an interdigitated transducer. The interdigitated transducer may comprise interdigitated electrodes on a piezoelectric substrate. The piezoelectric substrate may be the inner surface of the sorting channel or be connected to the inner surface of the sorting channel 40.

The device 1 may further comprise a processing unit 26. The processing unit 26 may be configured to receive data detected by the first detector 30 and the second detector 35 and to process the data for classifying a biological cell 4 exhibiting at least one modified movement in one zone 12 of the flow channel 10 into the cell category and for verifying an order of the biological cells 4 in the queue or detecting a change in the order of the biological cells 4 in the queue, wherein the processing unit 26 is further configured to send a control signal to the sorting element 50 for triggering the sorting element 50 to selectively affect the biological cell 4 of the queue.

The processing unit 26 may be a central processing unit (CPU), which may execute the instructions of one or more computer programs in order to provide desired functionality.

The processing unit 26 may alternatively be implemented as firmware arranged e.g. in an embedded system, or as a specifically designed processing unit, such as an Application-Specific Integrated Circuit (ASIC) or a Field-Programmable Gate Array (FPGA), which may be configured to implement desired functionality.

The processing unit 26 may be arranged in a common housing with the first detector 30 and the second detector 35. The processing unit 26 may be configured to receive the information of the classification of the biological cells 4 from the first detector 30 and the order of the biological cells 4 in the queue or the detection of a change in the order of the biological cells 4 in the queue directly from the second detector 35 for processing the combination of the classification of the biological cells 4 and the order of the biological cells 4. However, according to an alternative, the classification of the biological cells 4 and the verification of the order of the biological cells 4 in the queue or the detection of a change in the order of the biological cells 4 in the queue may be communicated through wired or wireless communication to the processing unit 26. Thus, the processing unit 26 may be physically arranged anywhere in relation to the first detector 35 and the second detector 35 and, such as being arranged in a server "in the cloud".

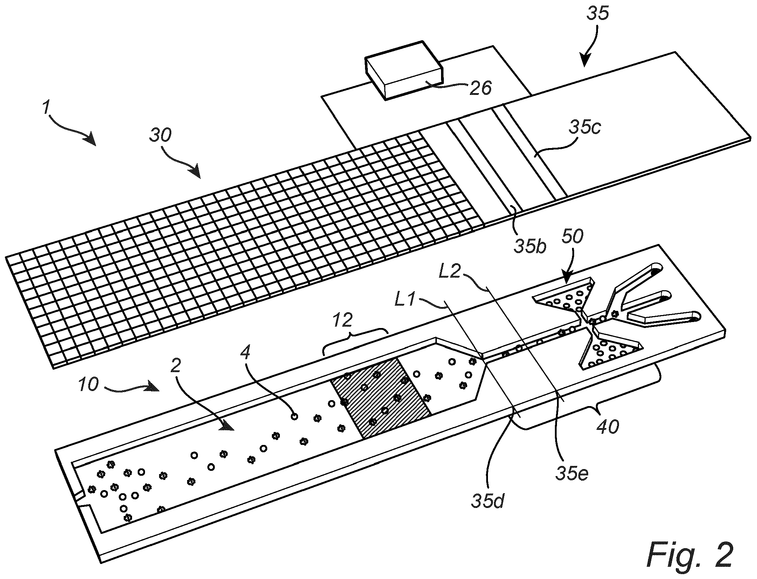

Fig. 2 illustrates a device 1 for sorting of biological cells 4 according to a second embodiment. The device 1 has many similarities with the device 1 of the first embodiment and only the differences are described below.

The second detector 35 may comprise a first cell interval detection unit 35b configured to detect a first time interval between two consecutive biological cells 4 at a first location L1 in the flow channel 10 in the sorting channel 40 or close to an inlet of the sorting channel 40. The position L1 may thus be a position as illustrated at the very start of the sorting channel 40 or slightly before the start of the sorting channel 40 or after the start of the sorting channel 40.

The first time interval includes information on how long time interval there is between two consecutive following cells passing the first location L1. Thus, the first time interval is the time it takes after the first cell 4 has passed the first location L1 until the next cell 4 passes the first location L1.

The second detector 35 may further comprise a second cell interval detection unit 35c configured to detect passage of cells 4 at a second location L2 in the sorting channel 40 for detecting a second time interval between the two consecutive biological cells 4 such that the order of the biological cells 4 in the queue can be verified or a change in the order of the biological cells 4 in the queue can be detected. The second location L2 may be arranged close to the sorting element 50 such that the order of the cells are confirmed close to the sorting.

The second cell interval detection unit 35c acts in the same way as the first cell interval detection unit 35b, such that it detects the time interval between two consecutive cells passing the second location L2.

If the cells are in the same order as when passing the first location L1, the time difference at the second location L2 is similar to the time difference at the first location L1. Then, the second cell interval detection unit 35c may provide a confirmation that may be used in controlling the sorting element 50. However, if the time difference at the second location L2 differs substantially from the time difference at the first location L1, the order of the cells might have changed, and the cell identification associated with the cell category might not be true.

The second cell interval detection unit 35c may act as a trigger associated with the sorting element 50. Thus, the second cell interval detection unit 35c may trigger the sorting element 50 to act on the cell. The action depending on the information of cell category from the first detector 30 and the trigger signal from the second detection unit 35c confirming or denying the cell identification based on the known order of the cells 4.

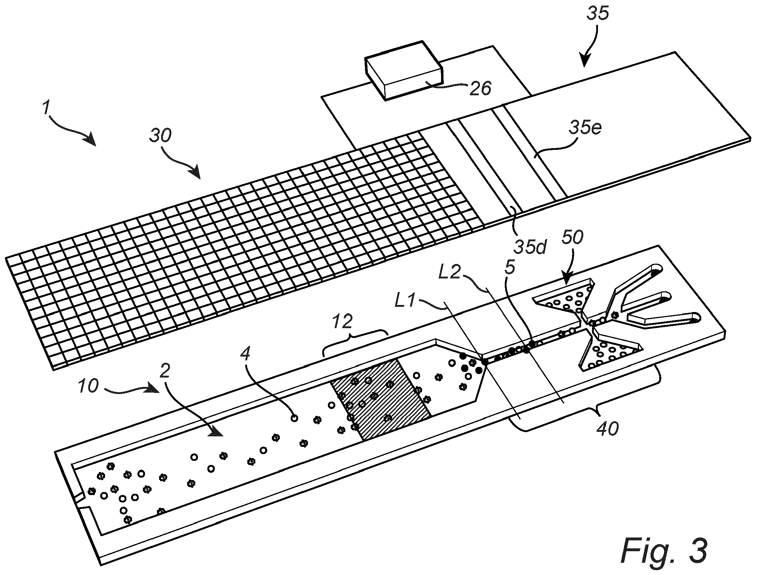

Fig. 3 illustrates a device 1 for sorting of biological cells 4 according to a third embodiment. The device 1 has many similarities with the device 1 of the first embodiment and only the differences are described below.

The device 1 may further be configured to pass a flow of liquid carrying markers 5 at least through the sorting channel 40.

The markers 5 may be carried by the flow of liquid 2 from an inlet of the flow channel 10, thus from the start of the flow channel 10 and through the entire flow channel 10 until reaching the sorting channel 40. Alternatively, the device 1 may comprise a second inlet arranged in the flow channel 10 close to the sorting channel 40, such as between the at least one zone 12 and the sorting channel 40.

The markers 5 may comprise polystyrene beads, magnetic beads, fluorescence beads, other synthetic particles or specific biological cells 4 with (optical) properties significantly different than the cells 4 of interest in flow channel 10.

The main distinct feature of the markers 5 may be the optical properties of the markers 5. Thus, any marker being non-invasive to the cells 4 but having different optical properties may be used. It may be an advantage if the markers 5 have the same mechanical and/or fluidic properties as the biological cells 4, to ensure similar flow behavior with cells 4 of interest.

The second detector 35 may comprise a first marker counter 35d configured to detect a first number of markers between two consecutive biological cells 4 in a first count at a first location L1 in the flow channel 10 in the sorting channel 40 or close to an inlet of the sorting channel 40. The position L1 may thus be a position as illustrated at the very start of the sorting channel 40 or slightly before the start of the sorting channel 40 or after the start of the sorting channel 40.

The first marker counter 35d counts the number of markers between two consecutive cells 4 passing the first marker counter 35d. The number of markers 5 between the cells may be 2, 5, 10 or 50 markers.

The second detector 35 may further comprise a second marker counter 35e configured to detect a second number of markers between the two consecutive biological cells 4 in a second count at a second location L2 in the sorting channel 40 for verifying the order of the biological cells 4 in the queue or detecting a change in the order of the biological cells 4 in the queue based on the first and the second numbers being equal or different. The second location L2 may be arranged close to the sorting element 50 such that the order of the cells are confirmed close to the sorting.

The second marker counter 35e acts in the same way as the first marker counter 35c, such that it detects the number of markers 5 between two cells passing the second location L2.

If the cells are in the same order as when passing the first location L1, the number of markers 5 at the second location L2 is similar to the number of markers 5 at the first location L1. Then, the second marker counter 35e may confirm this to the sorting element 50. However, if the number of markers 5 at the second location L2 differs substantially from the number of markers 5 at the first location L1, the order of the cells might have changed, and the cell identification associated with the cell category might not be true.

The second marker counter 35e may act as a trigger associated with the sorting element 50. Thus, the second marker counter 35e may trigger the sorting element 50 to act on the cell. The action depending on the information of cell category from the first detector 30 and the trigger signal from the second marker counter 35e confirming or denying the cell identification based on the known order of the cells 4.

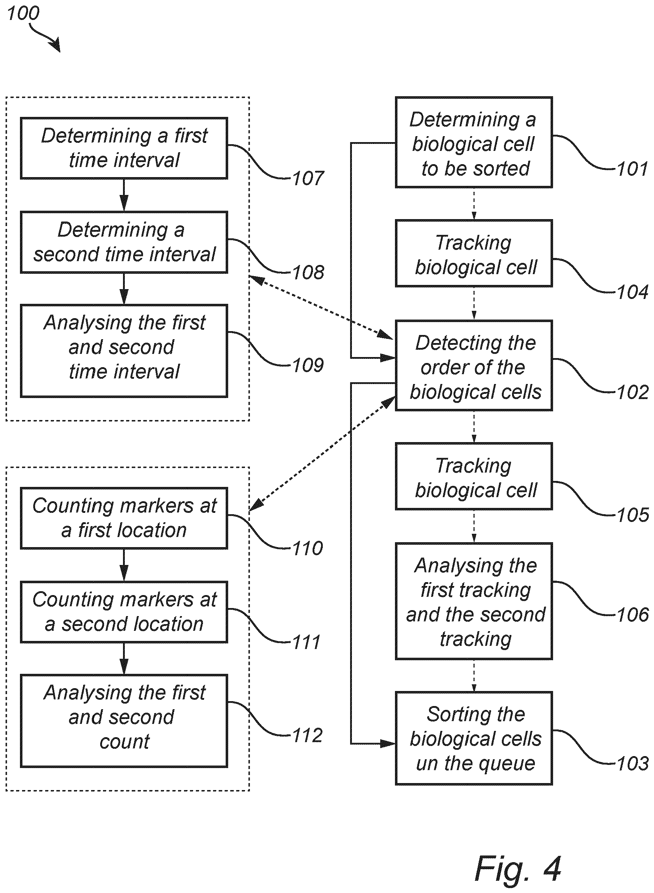

Fig. 4 illustrates a flow chart of a method 100 for sorting biological cells 4. The method 100 comprises detecting 101, by a first detector 30, a biological cell 4 to be sorted, carried by a flow of liquid 2, exhibiting at least one modified movement, passing at least one zone 12 in a flow channel 10.

By detecting 101 the cells 4, the method confirms the presence of the cells 4 in the flow channel 10 and further detects movement of the cells 4 through the flow channel 10. The detection 101 may be a single detection point or made at several detection points, such that a time-lapse of the cell 4 moving through the flow channel 10 may be acquired.

Each zone 12 of the flow channel 10 is associated with a cell category. The zone 12 of the flow channel 10 is configured to modify movement of the biological cell 4 in dependence of the biological cell 4 belonging to the cell category. The modified movement of the cell 4 is detected 101 by the first detector 30 and used to categorize the cell into a cell category. The cell 4 may be categorized as belonging a cell category associated with the zone 12 of the flow channel 10 or as not belonging to the cell category associated with the zone 12 depending on the movement of the cell through the zone 12.

The flow channel 10 further comprises a sorting channel 40 arranged after the at least one zone 12, the sorting channel 40 having a width for presenting the biological cells 4 in a queue one-by-one.

The detection 101, by the first detector 30, may further comprise tracking 104, in a first tracking, the modified movement exhibited by the biological cell 4. By tracking 104 of the cells 4, the cells 4 are followed through a plurality of detection points such that he movement of the cells 4 are tracked 104 over time.

The method 100 further comprises detecting 102, by a second detector 35, the order of the biological cells 4 in the sorting channel for verifying the order of the biological cells 4 in the queue or detecting a change in the order of the biological cells 4 in the queue.

The order of the biological cells 4 may be used together with the classification of the cells from the detection 101 by the first detector 30 to identify the cell 4. The order of the cells 4 may vary such that cells 4 changes placing in the queue to the sorting channel 40, leading to a less accurate sorting as the identity of the cells are not certain.

The detecting 102, by the second detector 35, may further comprise tracking 105, in a second tracking, of the biological cells 4 of the queue.

The method 100 may further comprise analyzing 106 the first tracking and the second tracking to verify the order of the biological cells 4 in the queue or detecting a change in the order of the biological cells 4 in the queue.

By this analysis 106, the cell categorization and the identification of the order of the cells are used for the sorting 103 of the cells 4.

As an alternative, the detecting 102 of the order of the biological cells in the queue may further comprise determining 107 a first time interval between two consecutive biological cells 4 at a first location L1 in the flow channel 10 in the sorting channel 40 or close to an inlet of the sorting channel 40. The first time interval indicates the time between the two cells, while they pass the first location L1.

Further, the detecting 102 of the order of the biological cells in the queue may comprise determining 108 a second time interval between the two consecutive biological cells 4 at a second location L2 in the sorting channel 40. This indicates the time interval between the consecutive cells at the second location L2.

The method 100 may further comprise analyzing 108 the first time interval and the second time interval to verify the order of the biological cells 4 in the queue or detecting a change in the order of the biological cells 4 in the queue.

If the cells are in the same order as when passing the first location L1, the time difference at the second location L2 is similar to the time difference at the first location L1. However, if the time difference at the second location L2 differs substantially from the time difference at the first location L1, the order of the cells might have changed, and the cell identification associated with the cell category might not be true.

As an alternative, the detecting 102 of the order of the biological cells in the queue may further comprise counting 110 markers 5 carried by the flow 2 in-between two consecutive biological cells 4 in a first count at a first location L1 in the flow channel 10 in the sorting channel 40 or close to an inlet of the sorting channel 40. The counting 110 reveals the number of markers 5 between the two cells 4.

The detecting 102 of the order of the biological cells in the queue may further comprise counting 111 markers 5 carried by the flow 2 in-between the two consecutive biological cells 4 in a second count at a second location L2 in the sorting channel 40. The counting 111 confirms the number of markers 5 between the two cells 4.

The method 100 may further comprise analyzing 112 the first count and the second count to verify the order of the biological cells 4 in the queue or detecting a change in the order of the biological cells 4 in the queue.

If the cells are in the same order as when passing the first location L1, the number of markers 5 at the second location L2 is similar to the number of markers 5 at the first location L1. However, if the number of markers 5 at the second location L2 differs substantially from the number of markers 5 at the first location L1, the order of the cells might have changed, and the cell identification associated with the cell category might not be true.

The method 100 further comprises sorting 103, by a sorting element 50, the biological cells 4 in the queue. The sorting element 50 selectively affects a biological cell 4 of the queue based on the order of the biological cells 4 in the queue and the classification of the biological cell 4.

By combining the cell categorization and the order of the cells 4, the sorting may be an accurate sorting since the identification of each of the cells 4 are known. A cell 4 which have changed placing or in other way have been detected as not being in the correct order by the second detector 35 may be sorted as not belonging to the cell category associated with the zone 12, the identity of the cell not being certain.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (1) for sorting biological cells (4), the device (1) comprising:
a flow channel (10) configured to pass a flow of liquid (2), wherein:
the flow of liquid (2) carries the biological cells (4) to be sorted,
the flow channel (2) comprises at least one zone (12),
each zone (12) of the flow channel (10) is associated with a cell category, wherein the zone (12) of the flow channel (10) is configured to modify movement of the biological cell (4) in dependence of the biological cell (4) belonging to the cell category;
the flow channel (10) comprises a sorting channel (40) arranged after the at least one zone (12), the sorting channel (40) having a width for presenting the biological cells (4) in a queue one-by-one;
a first detector (30) configured to detect a biological cell (4) exhibiting at least one modified movement in one zone (12) of the flow channel (10) for classifying the biological cell (4) into the cell category;
a second detector (35) for verifying an order of the biological cells (4) in the queue or detecting a change in the order of the biological cells (4) in the queue;
a sorting element (50) configured to act on the biological cells (4) in the queue, wherein the sorting element (50) selectively affects a biological cell (4) of the queue based on the order of the biological cells (4) in the queue and the classification of the biological cell (4).

2. A device (1) according to claim 1, wherein the first detector (30) is an imaging sensor (30a) configured to detect an interference pattern by receiving object light, which is incident on the imaging sensor (30a) after having interacted with the biological cells (4), and reference light, which is incident on the imaging sensor (30a) without having interacted with the biological cells (4), the imaging sensor being configured to detect the flow of liquid (2) in the flow channel (10) at least in one zone (12) of the flow channel (10) to track the biological cells (4) through the at least one zone (12) such that the modified movement is identified and the cell (4) is classified into the cell category.

3. A device (1) according to claim 1 or 2, wherein the second detector (35) is an imaging sensor (35a) configured to detect an interference pattern by receiving object light, which is incident on the imaging sensor (35a) after having interacted with the biological cells (4), and reference light, which is incident on the imaging sensor (35a) without having interacted with the biological cells (4), the imaging sensor (35a) being configured to detect the flow of liquid (2) in the sorting channel (40) to track the biological cells entering the sorting channel (40) such that the order of the biological cells (4) in the queue can be verified or such that a change in the order of the biological cells (4) in the queue can be detected.

4. A device (1) according to claim 1 or 2, wherein the second detector (35) is comprises a first cell interval detection unit (35b) configured to detect a first time interval between two consecutive biological cells (4) at a first location (L1) in the flow channel (10) in the sorting channel (40) or close to an inlet of the sorting channel (40), and a second cell interval detection unit (35c) configured to detect passage of cells (4) at a second location (L2) in the sorting channel (40) for detecting a second time interval between the two consecutive biological cells (4) such that the order of the biological cells (4) in the queue can be verified or a change in the order of the biological cells (4) in the queue can be detected.

5. A device (1) according to any one of claims 1 or 2, wherein the device (1) is further configured to pass a flow of liquid carrying markers (5) at least through the sorting channel (40).

6. A device (1) according to claim 5, wherein the second detector (35) comprises a first marker counter (35d) configured to detect a first number of markers between two consecutive biological cells (4) in a first count at a first location (L1) in the flow channel (10) in the sorting channel (40) or close to an inlet of the sorting channel (40), and a second marker counter (35e) configured to detect a second number of markers between the two consecutive biological cells (4) in a second count at a second location (L2) in the sorting channel (40) for verifying the order of the biological cells (4) in the queue or detecting a change in the order of the biological cells (4) in the queue based on the first and the second numbers being equal or different.

7. A device (1) according to any one of the preceding claims, wherein the sorting element (50) is a bubble sorter.

8. A device (1) according to any one of the preceding claims, further comprising a processing unit (26), wherein the processing unit (26) is configured to receive data detected by the first detector (30) and the second detector (35) and to process the data for classifying a biological cell (4) exhibiting at least one modified movement in one zone (12) of the flow channel (10) into the cell category and for verifying an order of the biological cells (4) in the queue or detecting a change in the order of the biological cells (4) in the queue, wherein the processing unit (26) is further configured to send a control signal to the sorting element (50) for triggering the sorting element (50) to selectively affect the biological cell (4) of the queue.

9. A method (100) for sorting biological cells (4), the method (100) comprising:
detecting (101), by a first detector (30), a biological cell (4) to be sorted, carried by a flow of liquid (2), exhibiting at least one modified movement, passing at least one zone (12) in a flow channel (10), wherein
each zone (12) of the flow channel (10) is associated with a cell category, wherein the zone (12) of the flow channel (10) is configured to modify movement of the biological cell (4) in dependence of the biological cell (4) belonging to the cell category;
the flow channel (10) comprises a sorting channel (40) arranged after the at least one zone (12), the sorting channel (40) having a width for presenting the biological cells (4) in a queue one-by-one;
detecting (102), by a second detector (35), the order of the biological cells (4) in the sorting channel for verifying the order of the biological cells (4) in the queue or detecting a change in the order of the biological cells (4) in the queue;
sorting (103), by a sorting element (50), the biological cells (4) in the queue, wherein the sorting element (50) selectively affects a biological cell (4) of the queue based on the order of the biological cells (4) in the queue and the classification of the biological cell (4).

10. A method (100) according to claim 9, wherein the detecting (101), by the first detector (30), further comprises:
tracking (104), in a first tracking, the modified movement exhibited by the biological cell (4);
and wherein the detecting (102), by the second detector (35), further comprises:
tracking (105), in a second tracking, of the biological cells (4) of the queue.

11. A method (100) according to claim 10, wherein the method (100) further comprises:
analyzing (106) the first tracking and the second tracking to verify the order of the biological cells (4) in the queue or detecting a change in the order of the biological cells (4) in the queue.

12. A method (100) according to any one of claims 9 to 11, wherein the detecting (102) of the order of the biological cells in the queue further comprises determining (107) a first time interval between two consecutive biological cells (4) at a first location (L1) in the flow channel (10) in the sorting channel (40) or close to an inlet of the sorting channel (40), and determining (108) a second time interval between the two consecutive biological cells (4) at a second location (L2) in the sorting channel (40), wherein the method (100) further comprises:
analyzing (109) the first time interval and the second time interval to verify the order of the biological cells (4) in the queue or detecting a change in the order of the biological cells (4) in the queue.

13. A method (100) according to any one of claims 9 to 12, wherein the detecting (102) of the order of the biological cells (4) in the queue further comprises counting (110) markers (5) carried by the flow (2) in-between two consecutive biological cells (4) in a first count at a first location (L1) in the flow channel (10) in the sorting channel (40) or close to an inlet of the sorting channel (40), and counting (111) markers (5) carried by the flow (2) in-between the two consecutive biological cells (4) in a second count at a second location (L2) in the sorting channel (40), wherein the method (100) further comprises:
analyzing (112) the first count and the second count to verify the order of the biological cells (4) in the queue or detecting a change in the order of the biological cells (4) in the queue.
